# EUROPEAN PATENT APPLICATION

(11) **EP 2 919 472 A1**
(43) Date of publication of application: **16.09.2015**
(21) Application number: 15165108.0
(22) Date of filing: 26.03.2013
(51) Int. Cl.: H04N 21/422, H04N 21/2343

(54) **DISPLAY APPARATUS, METHOD FOR CONTROLLING DISPLAY APPARATUS, AND INTERACTIVE SYSTEM**

(30) Priority: 27.06.2012 KR 20120069310; 14.12.2012 KR 20120146343
(62) Divisional of application: 13161148.5
(71) Applicant: Samsung Electronics Co., Ltd, Gyeonggi-do 443-742 (KR)
(72) Inventor: Yoon, Seung-il, Gyeonggi-do (KR); Kim, Sang-hee, Gyeonggi-do (KR); Kim, Jae-cheol, Gyeonggi-do (KR); Lee, Sang-kwon, Gyeonggi-do (KR); Lee, Cheon-seong, Gyeonggi-do (KR); Lee, Hye-jeong, Seoul (KR); Jung, Jae-wook, Gyeonggi-do (KR); Cha, Tae-hwan, Gyeonggi-do (KR)
(74) Representative: Appleyard Lees

(57) **Abstract**

An image processing apparatus, a method of controlling an image processing apparatus, and an interactive system are provided. The image processing apparatus includes: an output unit which outputs at least one a voice and a text; a voice collecting unit which collects a user voice; a first communication unit which transmits the user voice to a first server and receives text information corresponding to the user voice from the first server; a second communication unit which transmits the received text information to a second server; and a control unit which, if response information corresponding to the text information is received from the second server, controls the output unit to output a response message responding to the user voice based on the response information.

## Description

### BACKGROUND

### 1. Field

Apparatuses and methods consistent with exemplary embodiments relate to display apparatuses, methods for controlling a display apparatus, and interactive systems, and more particularly, to display apparatuses which are controlled by a user voice, methods for controlling a display apparatus, and interactive systems.

### 2. Description of the Related Art

With the development of electronic technology, various types of display apparatuses have been developed and distributed and, accordingly, the display apparatuses have been equipped with diverse functions to meet the demands of users. In particular, recent televisions are connected to the Internet to support Internet services, and users may be able to watch a plurality of digital broadcast channels on the televisions.

Recently, a voice recognition technology has been developed in order to allow users to control a display apparatus more conveniently and intuitively. In particular, televisions have become capable of recognizing a user voice and performing corresponding functions, such as adjusting volumes or changing channels, in response to the user voice.

However, the related art display apparatuses using the voice recognition technology merely provide functions corresponding to recognized voices, and do not provide interactive information through conversation with users.

### SUMMARY

One or more exemplary embodiments provide to a display apparatus capable of communicating with users by interlocking with an external server, a method for controlling a display apparatus, and an interactive system.

According to an aspect of an exemplary embodiment, there is provided a display apparatus including: an output unit which outputs at least one of a voice and a text; a voice collecting unit which collects a user voice; a first communication unit which transmits the user voice to a first server and receives text information corresponding to the user voice from the first server; a second communication unit which transmits the received text information to a second server; and a control unit which, if response information corresponding to the text information is received from the second server, controls the output unit to output a response message responding to the user voice based on the response information.

The response information may include response message information to output a response message from the display apparatus, and the control unit may generate and output a response message corresponding to the user voice as at least one of the voice and the text through the output unit based on the response message information.

The response information may further include a control command to control an operation of the display apparatus.

The second server may determine an intention of the user voice based on the received text information, and if it is not possible to generate the response information according to the determined intention, may generate the response information using search information received from an external server.

According to an aspect of another exemplary embodiment, there is provided a method for controlling a display apparatus, the method including: collecting a user voice; transmitting the user voice to a first server and receiving text information corresponding to the user voice from the first server; transmitting the received text information to a second server; and if response information corresponding to the text information is received from the second server, outputting a response message responding to the user voice based on the response information.

The response information may include response message information to output a response message from the display apparatus, and the outputting may include generating and outputting a response message corresponding to the user voice as at least one of a voice and a text based on the response message information.

The response information may further include a control command to control an operation of the display apparatus.

The second server may determine an intention of the user voice based on the received text information, and if it is not possible to generate the response information according to the determined intention, may generate the response information using search information received from an external server.

According to an aspect of another exemplary embodiment, there is provided an interactive system including a first server, a second server, and a display apparatus which is interlocked with the first server and the second server, the interactive system including: the first server which, if a user voice is received from the display apparatus, transmits text information corresponding to the user voice to the display apparatus; the second server which, if the text information is received from the display apparatus, transmits response information corresponding to the text information to the display apparatus; and the display apparatus which, if the response information is received from the second server, outputs a response message corresponding to the user voice based on the response information.

The response information may include response message information to output a response message in the display apparatus, and the display apparatus may output the response message corresponding to the user voice as at least one of a voice and a text based on the response message information.

According to an aspect of another exemplary embodiment, there is provided a method for controlling an image processing apparatus, the method including: transmitting a collected user voice to a first server and receiving text information corresponding to the collected user voice from the first server; and in response to response information corresponding to the transmitted user voice being received from a second server, outputting a response message responding to the collected user voice based on the received response information, wherein the first server and the second server are a same server or are different servers.

According to various exemplary embodiments, a display apparatus capable of communicating with a user is provided and thus, user convenience may be improved.

### BRIEF DESCRIPTION OF THE DRAWINGS

The above and/or other aspects will be more apparent by describing exemplary embodiments with reference to the accompanying drawings, in which:
FIG. 1 is a view to explain an interactive system according to an exemplary embodiment;
FIG. 2 is a timing view to explain each operation of the interactive system illustrated in FIG. 1;
FIG. 3 is a block diagram to explain a configuration of a display apparatus according to an exemplary embodiment;
FIG. 4 is a block diagram to explain a specific configuration of the display apparatus illustrated in FIG. 3;
FIG. 5 is a block diagram to explain a configuration of a first server according to an exemplary embodiment;
FIG. 6 is a block diagram to explain a configuration of a second server according to an exemplary embodiment;
FIG. 7 is a view to explain an interactive system according to another exemplary embodiment;
FIG. 8 is a timing view to explain each operation of the interactive system illustrated in FIG. 7;
FIGS. 9 to 11 are views to explain an operation of an interactive system according to an exemplary embodiment; and
FIG. 12 is a flowchart to explain a method for controlling a display apparatus according to an exemplary embodiment.

### DETAILED DESCRIPTION OF EXEMPLARY EMBODIMENTS

Certain exemplary embodiments are described in higher detail below with reference to the accompanying drawings.

In the following description, like drawing reference numerals are used for the like elements, even in different drawings. The matters defined in the description, such as detailed constructions and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

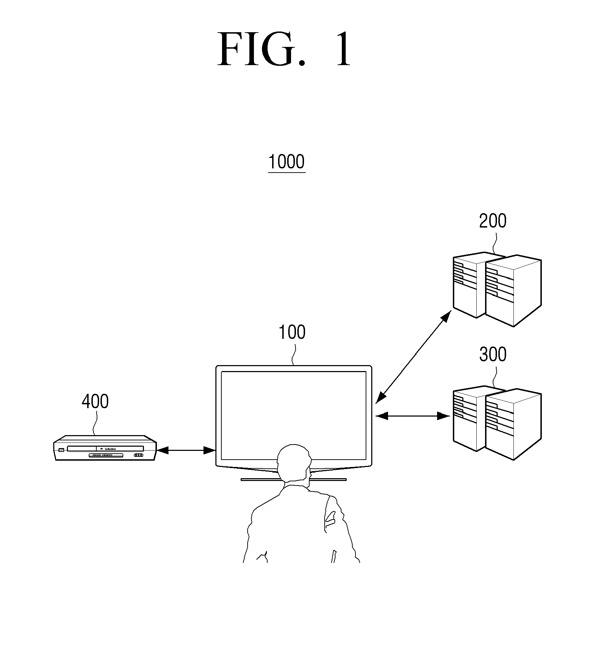

FIG. 1 is a view to explain an interactive system 1000 according to an exemplary embodiment. As illustrated in FIG. 1, an interactive system includes a display apparatus 100, a first server 200, a second server 300, and an external device 400. For example, the display apparatus 100 may be a television as illustrated in FIG. 1, although it is understood that this is only an example. The display apparatus 100 may be realized as various electronic apparatuses such as a mobile phone, a smart phone, a desktop personal computer (PC), a notebook PC, a navigator, a portable multimedia player, a gaming device, a tablet computer, etc. Furthermore, it is understood that exemplary embodiments are not limited to a display apparatus 100 that displays an image thereon, but are also applicable to image processing apparatuses that process an image and output the processed image to a display device to be displayed.

The display apparatus 100 may be controlled using a remote controller (not shown). For example, if the display apparatus 100 may be a TV, operations such as turning on or off the TV, changing channel, and adjusting volume may be performed according to a control signal received from the remote controller (not shown).

In addition, the external device 400 may be implemented with various electronic devices. For example, the external device 400 may be a digital versatile disk (DVD) player as illustrated in FIG. 1, but this is merely an example. That is, the external device 400 may be implemented with various electronic devices which is connected to the display apparatus 100 and performs operations, such as a set-top box, a sound system, a game console, and the like.

The display apparatus 100 may perform various functions according to a user voice.

Specifically, the display apparatus 100 outputs a response message corresponding to the user voice, performs an operation corresponding to the user voice, or controls the external device 400 to perform an operation corresponding to the user voice.

The display apparatus 100 transmits a collected (e.g., captured) user voice to the first server 200 to this end. Once the first server 200 receives the user voice from the display apparatus 100, the first server 200 converts the received user voice into text information (or text) and transmits the text information to the display apparatus 100.

Subsequently, the display apparatus 100 transmits the text information received from the first server 200 to the second server 300. Once the second server 300 receives the text information from the display apparatus 100, the second server 300 generates response information regarding the received text information and transmits the response information to the display apparatus 100.

The display apparatus 100 may perform various operations based on the response information received from the second server 300. Specifically, the display apparatus 100 may output a response message corresponding (i.e., responding) to the collected user voice. Herein, the response message may be output as at least one of a voice and a text. For example, if a user voice asking for the broadcast time of a specific program is input, the display apparatus 100 may output the broadcast time of the corresponding program as a voice, a text, or combination of the two.

In addition, the display apparatus 100 may perform a function corresponding to a user voice. That is, the display apparatus 100 performs a function corresponding to a user voice from among diverse functions of the display apparatus 100. For example, if a user voice to change channels is input, the display apparatus 100 may select and display a corresponding channel. In this case, the display apparatus 100 may also provide a response message regarding the corresponding function. That is, the display apparatus 100 may output information regarding the function performed in response to the user voice in a voice or text form or combination thereof. In the above-described exemplary embodiment, the display apparatus 100 may output information regarding the changed channel or a message informing that the change of channels has been completed as at least one of a voice and a text.

In addition, the display apparatus 100 may control the external device 400 to perform a function corresponding to a user voice. That is, the display apparatus 100 may control the external device 400 to perform a function corresponding to a user voice from among functions of the external device 400. The display apparatus 100 may transmit a control command to perform the function corresponding to the user voice to the external device 400 to this end.

For example, if the external device 400 is a DVD player as illustrated in FIG. 1, the display apparatus 100 may transmit a control command to turn on or off the DVD player, a control command to play back a DVD, or a control command to pause the playback to the DVD player.

However, this is merely an example of a case in which the external device 400 is a DVD player. The display apparatus 100 may transmit a control command to perform a function corresponding to a user voice to the external device 400 differently according to the type of the external device 400. For example, if the external device 400 is a set-top box, the display apparatus 100 may transmit a control command to change a channel to the set-top box based on a user voice to change a channel.

FIG. 1 illustrates the interactive system 1000 including the external device 400, but this is merely an example. The interactive system 1000 may not include the external device 400.

However, if the display apparatus 100 is not connected to the external device 400 and receives a user voice to control the external device 400, the display apparatus 100 may output a message informing that an operation corresponding to the user voice cannot be performed. For example, suppose that in the interactive system 1000 illustrated in FIG. 1, a DVD player is not connected. If the display apparatus 100 receives a user voice to turn off the DVD player, the display apparatus 100 may output a message informing "The DVD player is not connected" or "Please check whether the DVD player is connected" in at least one of voice and text.

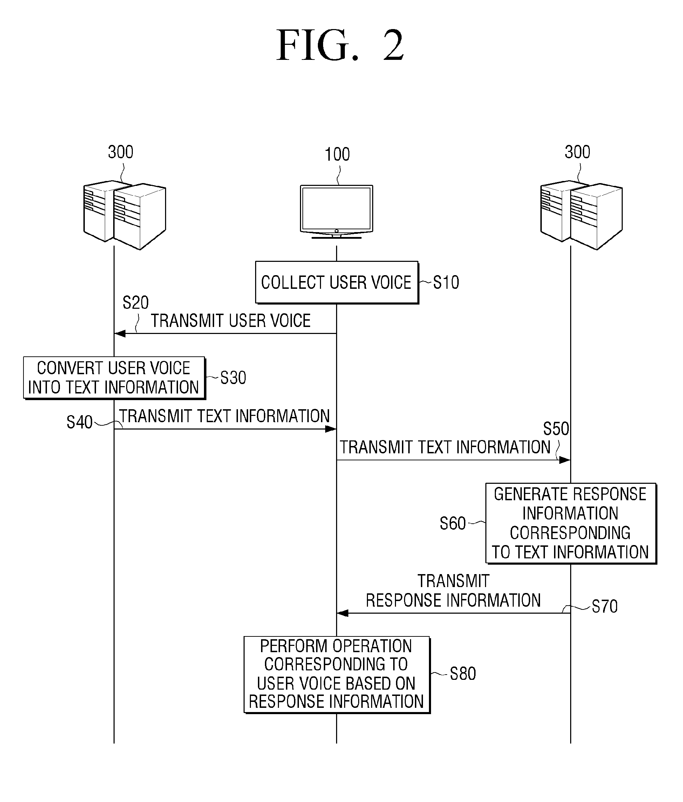

FIG. 2 is a timing view to explain each operation of the interactive system illustrated in FIG. 1.

According to FIG. 2, the display apparatus 100 collects (e.g., captures or records) a user voice (operation S10), and transmits the collected user voice to the first server 200 (operation S20). Specifically, if a mode for collecting a user voice is started, the display apparatus 100 may collect a voice uttered by a user within a predetermined distance and transmit the collected voice to the first server 200.

To do so, the display apparatus 100 may include a microphone to receive the voice uttered by the user. In this case, the microphone may be integrally formed inside the display apparatus 100 or may be realized separately from the display apparatus 100. If the microphone is realized separately from the display apparatus 100, the microphone may be realized in the form such that a user may grip the microphone using hands or the microphone may be placed on a table, and the microphone may be connected to the display apparatus 100 via cable or wireless network. Furthermore, the microphone may be integrated into another device.

The first server 200 converts a user voice received from the display apparatus 100 into text information (operation S30). Specifically, the first server 200 may convert a user voice received from the display apparatus 100 into text information using a Speech to Text (STT) algorithm. Subsequently, the first server 200 transmits the text information to the display apparatus 100 (operation S40).

The display apparatus 100 transmits the text information received from the first server 200 to the second server 300 (operation S50). If the text information is received from the display apparatus 100, the second server 300 generates response information corresponding to the text information (operation S60), and transmits the generated response information to the display apparatus 10 (operation S70).

Herein, the response information includes response message information to output a response message from the display apparatus 100. The response message is a response corresponding to the user voice collected from the display apparatus 100, and the response message information may be text information from which is generated the response message output by the display apparatus 100 in response to the collected user voice. Accordingly, the display apparatus 100 may output the response message corresponding to the user voice as at least one of a voice and a text based on the response message information.

In addition, the response information may further include a control command to execute a function corresponding to the user voice in the display apparatus 100. The control command may include a control command to control the display apparatus 100 to perform the function corresponding to the user voice, and a control command to control the external device 400 to the function corresponding to the user voice. Accordingly, the display apparatus 100 may perform the function corresponding to the user voice or control the external device 400 to perform the function corresponding to the user voice.

The display apparatus 100 performs an operation corresponding to a user voice based on the received response information (operation S80).

Specifically, the display apparatus 100 may output a response message corresponding to a user voice based on response message information included in response information. That is, if response message information in the text form is received from the second server 300, the display apparatus may convert the text into a voice and output the voice using a Text to Speech (TTS) algorithm or may compose a User Interface (UI) screen to include the text constituting the response message information and output the screen.

For example, if a user voice, "when does ○○○ (name of a broadcast program) start?", is collected, the second server 300 may transmit response message information in the text form, "it will start on Saturday, 7 o'clock", to the display apparatus 100. Accordingly, the display apparatus 100 may output the response message, "it will start on Saturday, 7 o'clock", as at least one of a voice and a text.

In addition, the display apparatus 100 may be controlled to perform a function corresponding to the user voice in accordance with a control command included in the response information. For example, if a user voice, "please record ○○○ (name of a broadcast program) in the display apparatus 100", is collected, the second server 300 may transmit a control command to record "○○○" to the display apparatus 100. Accordingly, the display apparatus 100 may perform scheduled recording of the corresponding broadcast program.

For another example, suppose that the external device 400 is realized as a DVD player. In this case, if a user voice, "please turn on the DVD player", is collected, the second server 300 may transmit a control command to turn on the DVD player to the display apparatus 100. Accordingly, the display apparatus 100 may transmit a control command to turn on the DVD player to the DVD player so that the DVD player may be turned on.

In this case, the response information may further include response message information corresponding to the function performed in the display apparatus 100. That is, in the above-described exemplary embodiment, the second server 300 may transmit response message information in the text form, "The recording of ○○○ is scheduled", to the display apparatus 100 along with a control command, and the display apparatus 100 may output the response message, "The recording of ○○○ is scheduled" as at least one of a voice and a text while perform the scheduled recording.

In addition, the response information may further include response message information corresponding to a function performed by the external device 400. That is, in the example described above, the second server 300 may transmit response message information in the text form, "The DVD player has been turned on", to the display apparatus 100 along with a control command, and the display apparatus 100 may output the response message, "The DVD player is has been turned on" in at least one of a voice and a text while turning on the DVD.

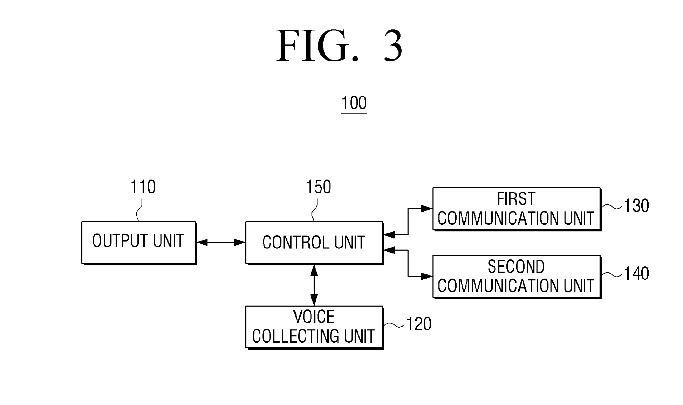

FIG. 3 is a block diagram to explain a configuration of a display apparatus 100 according to an exemplary embodiment. Referring to FIG. 3, the display apparatus 100 includes an output unit 110 (e.g., outputter), a voice collecting unit 120 (e.g., voice collector), a first communication unit 130 (e.g., first communicator), a second communication unit 140 (e.g., second communicator), and a control unit 150 (e.g., controller). In particular, FIG. 3 is a block diagram to explain a configuration of a display apparatus 100 when an interactive system 1000 is realized without an external device 400. Accordingly, if an interactive system 1000 is realized with an external device 400, the display apparatus 100 may further include a component to communicate with the external device 400.

The output unit 110 outputs at least one of a voice and an image. Specifically, the output unit 110 may output a response message corresponding to a user voice collected through the voice collecting unit 120 in the form of at least one of a voice and a text.

To do so, the output unit 110 may include a display unit (e.g., display) and an audio output unit (e.g., audio outputter).

Specifically, the display unit (not shown) may be realized as a Liquid Crystal Display (LCD), an Organic Light Emitting Display (OLED), a Plasma Display Panel (PDP), etc., and provide various display screens which can be provided through the display apparatus 100. In particular, the display unit (not shown) may display a response message corresponding to a user voice in the form of text or an image.

Herein, the display unit (not shown) may be realized as a touch screen which forms an inter-layered structure with a touch pad, and the touch screen may be configured to detect the press of a touch input.

The audio output unit (not shown) may be realized as an output port such as a jack or a speaker, and output a response message corresponding to a user voice in the form of voice.

The output unit 110 may output various images and audio. The image and audio may be image and audio which constitute broadcast content or multimedia content.

The voice collecting unit 120 collects a user voice. For example, the voice collecting unit 120 may be realized as a microphone to collect a user voice and may be integrally formed inside the display apparatus 100 or may be realized separately from the display apparatus 100. If the microphone is realized separately from the display apparatus 100, the microphone may be realized in the form such that a user may grip the microphone using hands or the microphone may be placed on a table, and the microphone may be connected to the display apparatus 100 via cable or wireless network in order to transmit a collected user voice to the display apparatus 100. Furthermore, the microphone may be integrated into another device. The voice collecting unit 120 may determine whether the collected user voice is a voice uttered by a user or not and filter noise (for example, air conditioning sound, cleaning sound, music sound, and the like) in the user voice. By way of example, when the user's voice, e.g., analog user's voice, is input, the voice collection unit 120 samples the analog user's voice and converts the user's voice into a digital signal. In this case, the voice collection unit 120 calculates energy of the converted digital signal and determines whether or not the energy of the digital signal is equal to or larger than a preset value.

When it is determined that the energy of the digital signal is equal to or larger than the preset value, the voice collection unit 120 removes noise and transmits a noise-removed voice. The noise component may be a sudden noise which can occur in the home environment such as an air conditioning sound, a cleaning sound, or a music sound. When it is determined that the energy of the digital signal is less than the preset value, the voice collection unit 120 performs no processing on the digital signal and waits for another input. Thus, the audio processing procedure is not activated by the other sounds other than the user's voice so that unnecessary power consumption can be prevented.

The first communication unit 130 communicates with the first server (200 in FIG. 1). Specifically, the first communication unit 130 may transmit a user voice to the first server 200 and receive text information corresponding to the user voice from the first server 200.

The second communication unit 140 communicates with the second server (300 in FIG. 1). Specifically, the second communication unit 140 may transmit the received text information to the second server 300 and receive response information corresponding to the text information from the second server 300.

To do so, the first communication unit 130 and the second communication unit 140 may include a communication module to perform communication with the first server 200 and the second server 300, respectively. For example, the communication module may include a network interface card to perform communication with the first server 200 and the second server 300 through a network. It is understood that in another exemplary embodiment, the first communication unit 130 and the second communication unit 140 may be provided as a single communication unit.

In addition, the first communication unit 130 and the second communication unit 140 may communicate with the first server 200 and the second server 300 using various communication methods. For example, the first communication unit 130 and the second communication unit 140 may communicate with the first server 200 and the second server 300 using wired or wireless local area network (LAN), wide area network (WAN), Ethernet, Bluetooth, Zigbee, universal serial bus (USB), IEEE 1394, WiFi, and so on. To do so, the first communication unit 130 and the second communication unit 140 may include a chip or input port corresponding to each communication method. For example, if communication is performed using wired LAN, the first communication unit 130 and the second communication unit 140 may include a wired LAN card (not shown) and an input port (not shown).

In the above-described exemplary embodiment, the display apparatus 100 includes the first communication unit 130 and the second communication unit 140 separately in order to perform communication with the first server 200 and the second sever 300, but this is only an example. That is, the display apparatus 100 may communicate with the first server 200 and the second server 300 through a single communication module.

The control unit 150 controls overall operations of the display apparatus 100. Specifically, the control unit 150 may collect a user voice through the voice collection unit 120 and control the first communication unit 130 to transmit the collected user voice to the first server 300. In addition, the control unit 150 may control the first communication unit 130 to receive text information corresponding to the user voice.

Meanwhile, if response information corresponding to the text information is received from the second server 300, the control unit 150 may control the output unit 110 to output a response message corresponding to the user voice based on the response information.

Herein, the response information may include response message information to output the response message. The response message information is a response message output from the display apparatus in text form, and the control unit 150 may output a response message corresponding to a user voice through the output unit 110 in the form of at least one of a voice and a text based on the response message information.

Specifically, the control unit 150 may convert the response message information in the text form into a voice using a TTS engine and output the voice through the output unit 110. Herein, the TTS engine is a module to convert a text into a voice, and may convert a text into a voice using various related art TTS algorithms. In addition, the control unit 150 may compose a user interface (UI) screen to include a text constituting response message information and output the UI screen through the output unit 110.

For example, if the display apparatus 100 is a TV and collects a user voice, "what is the most popular program, recently?", the second server 300 may express a response message "The most popular program is ○○○ (name of a broadcast program)" in a text form and transmit the response message to the display apparatus 100. In this case, the control unit 150 may convert the response message into voice and output the voice through the output unit 110, or may constitute a user interface (UI) screen including the response message in a text form and output the UI screen through the output unit 110.

In addition, response information may include a control command to control a function of the display apparatus 100. The control command may include a command to execute a function corresponding to the user voice from among the functions which can be executed by the display apparatus 100. Accordingly, the control unit 150 may control each component of the display apparatus 100 to execute the function corresponding to the user voice based on the control command received from the second server 300.

For example, if the display apparatus 100 is a TV and collects a user voice, "please turn up the volume", the second server 300 may transmit a control command to increase the volume of the display apparatus 100 to the display apparatus 100. In this case, the control unit 150 may increase the volume of audio output through the output unit 110 based on the control command. However, this is merely an example. The control unit 150 may control each component of the display apparatus 100 to perform various operations such as turning power on/off, changing channels, etc., in accordance with a collected control command.

In addition, response information may include response message information regarding a function executed in accordance with a control command. In this case, the control unit 150 may perform the function in accordance with the control command, and output a response message regarding the executed function in the form of at least one of voice and text based on the response message information.

For example, if the display apparatus 100 is a TV and collects a user voice, "please change the channel to channel 11", the second server 300 may transmit a control command to change the channel of the display apparatus 100 to channel 11 and a response message expressed in a text form, "the channel has been changed to channel 11", to the display apparatus 100. In this case, the control unit 150 changes the channel to channel 11 through the output unit 110 based' on the control command. In addition, the control unit 150 may convert a response message, "the channel has been changed to channel 11", into voice and output the voice through the output 110, or may constitute a UI screen including text, "the channel has been changed to channel 11", and output the UI screen through the output unit 110.

As described above, the control unit 150 may output a response message corresponding to a user voice or execute a function corresponding to a user voice.

In addition, the control unit 150 may output a response message corresponding to a user voice without performing a specific function in the display apparatus 100 when the user voice indicates a function which cannot be performed in the display apparatus 100.

For example, suppose the display apparatus 100 is realized as a TV which does not support a videophone function. In this case, if the display apparatus 100 collects a user voice, "please make a telephone call to XXX", the second server 300 may transmit a control command to perform a videophone function to the display apparatus 100. However, since the display apparatus 100 does not support the videophone function corresponding to the control command, the control unit 150 cannot recognize the control command received from the second server 300. In this case, the control unit 150 may output a response message, "this function is not supported", through the output unit 110 in the form of at least one of a voice and a text.

In the above-described exemplary embodiment, the response message information transmitted from the second server 300 is a response message in the text form, but this is only an example. That is, the response message information may be voice data itself which constitutes the corresponding response message, or may be a control signal to output the corresponding response message using a voice or a text which is pre-stored in the display apparatus 100.

Accordingly, the control unit 150 may output a response message in consideration of the form of response message information. Specifically, if voice data constituting a response message is received, the control unit 150 may process the corresponding data so that the data can be output through the output unit 110 and then output the data in the form of at least one of voice and text.

Alternatively, if a control signal to output a response message is received, the control unit 150 may search voice or text data matching with the control signal from among data pre-stored in the display apparatus 100, process the searched voice or text data so that the data can be output through the output unit 110, and then output the data. To do so, the display apparatus 100 may store voice or text data to provide a response message regarding performing the functions of the display apparatus 100 or voice or text data regarding requests for information. For example, the display apparatus 100 may store data in the form of a complete sentence such as, "the change of channels has been completed", or partial data constituting a sentence such as "the channel has been changed to ...". In this case, the name of channel which completes the corresponding sentence may be received from the second server 300.

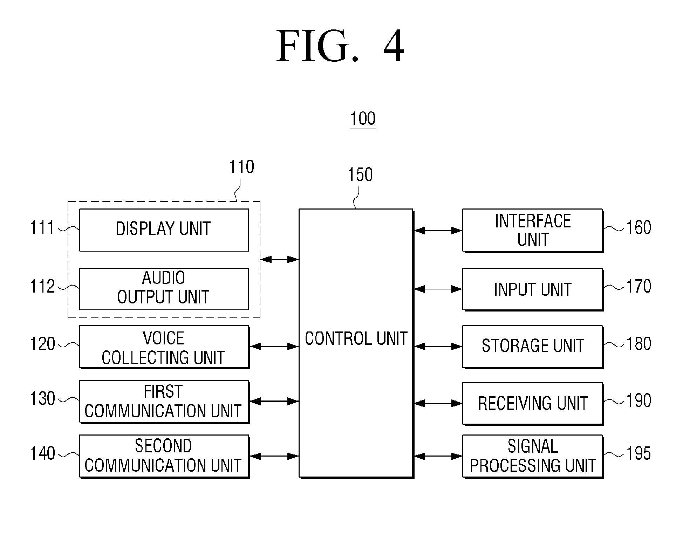

FIG. 4 is a block diagram to explain a specific configuration of the display apparatus 100 illustrated in FIG. 3. Referring to FIG. 4, the display apparatus 100 may further include an interface unit 160(e.g., interface), an input unit 170 (e.g., inputter), a storage unit 180 (e.g., storage), a receiving unit 190 (e.g., receiver), and a signal processing unit 195 (e.g., signal processor) in addition to the components illustrated in FIG. 3. The components in FIG. 4 which are overlapped with those in FIG. 3 perform the same or similar functions as those in FIG. 3 and thus, detailed descriptions will not be provided.

The interface unit 160 communicates with an external device (400 of FIG. 1). Specifically, the interface unit 160 may communicate with the external device 400 using a wired communication method such as HDMI, USB, and the like, or using a wireless communication method such as Bluetooth, Zigbee, and the like. To do so, the interface unit 160 may include a chip or input port corresponding each communication method. For example, if the interface unit 160 may communicate with the external device 400 using the HDMI communication method, the interface unit 160 may include an HDMI port.

It has been described above with reference to FIG. 3 that the display apparatus 100 receives response information from the second server 300 and thus performs various operations.

In this case, the response information may include a control command to control a function of the external device 400. The control command may include a command to execute a function corresponding to a user voice from among the functions executable in the external device 400. Accordingly, the control unit 150 may transmit a control command received from the second server 300 to the external device 400 through the interface unit 160 so that the external device 400 may perform the function corresponding to the user voice.

For example, suppose that the external device 400 is realized as a DVD player. If the display apparatus 100 collects a user voice, "please turn on the DVD player", the second server 300 may transmit a control command to turn on the DVD player to the display apparatus 100. In this case, the control unit 150 may transmit the control command received from the second server 300 to the DVD player. Accordingly, the DVD player may be turned on based on the control command received from the display apparatus 100. However, this is merely an example. The external device 400 may perform various functions based on a control command received in accordance with a user voice.

If the control unit 150 cannot control the external device 400 based on a control command received from the second server 300, the control unit 150 may output a message informing that the external device 400 cannot be controlled in accordance with a user voice, in the form of at least one of voice and text. The external device 400 cannot be controlled based on a control command when a device which is the subject of the control command received from the second server 300 is not connected to the display apparatus 100.

That is, the control unit 150 may determine the type of the external device 400 which is connected to the interface unit 160. Subsequently, if a device which is the subject of a control command received from the second server 300 is not connected to the interface unit 160, the control unit 150 outputs a message informing such a situation in the form of at least one of voice and text.

For example, suppose that the external device 400 which is connected to the display apparatus 100 is a DVD player. If the display apparatus 100 collects a user voice, "please turn on the game console", the second server 300 may transmit a control command to turn on the game console to the display apparatus 100. Since the game console which is the subject of the control command is not connected to the interface unit 160, the control unit 150 may output a message such as "please check connection of the game console" or "this user voice is not supported" in the form of at least one of voice and text.

The input unit 170 is an input means to receive and transmit various user manipulations to the control unit 150, and may be realized as an input panel. Herein, the input panel may be realized as a key pad or a touch screen including various function keys, number keys, special keys, text keys, and so on. In addition, the input unit 170 may be realized as an infrared (IR) receiving unit (not shown) to receive a remote control transmitted from a remote controller to control the display apparatus 100.

The input unit 170 may receive various user manipulations to control the functions of the display apparatus 100. For example, if the display apparatus 100 is realized as a smart television, user manipulations to control the functions of the smart television, such as manipulations to turn power on/off, change channels, change volume, etc. may be input to control the functions of the smart television. In this case, the control unit 150 may control other component elements to perform various functions corresponding to user manipulations input through the input unit 170. For example, if a command to turn off power is input, the control unit 150 may cut off power provided to each component of the display apparatus 100, and if a command to change channels is input, the control unit 150 may control the receiving unit 190 to select a channel in accordance with a user manipulation.

In particular, the input unit 170 receives a user manipulation to initiate a voice recognition mode to collect a user voice. For example, the input unit 170 may be realized in the form of a touch screen along with a display unit, and display an object (such as an icon) to receive an input in a voice recognition mode. Alternatively, the input unit 170 may have a separate button to receive an input in a voice recognition mode. If a user manipulation to initiate a voice recognition mode is received through the input unit 170, the control unit 150 may collect a user voice uttered within a predetermined distance by activating the voice collecting unit 120. Subsequently, the control unit 150 may receive response information corresponding to the collected user voice through communication with the first server 200 and the second server 300 in order to control to output a response message or perform a specific function.

The storage unit 180 is a storage medium where various programs to operate the display apparatus 100 are stored, and may be realized as a memory, Hard Disk Drive (HDD) and so on. For example, the storage unit 180 may include ROM for storing programs to perform operations of the control unit 150, RAM for temporarily storing data regarding performing of the operations of the control unit 150, and so on. In addition, the storage unit 180 may further include Electrically Erasable and Programmable ROM (EEPROM) for storing various reference data.

In particular, the storage unit 180 may pre-store various response messages corresponding to user voices as voice data or text data. Accordingly, the control unit 150 may read out voice or text data corresponding to voice message information (particularly, a control signal) received from the second server 300 from the storage unit 180 and output the data through an audio output unit 112 or a display unit 111. In this case, the control unit 150 may output the data through the audio output unit 112 by performing signal-processing such as decoding with respect to the voice data and amplifying the decoded voice data, and may output the data through the display unit 111 by composing a UI screen to include a text constituting the text data. In the above-described exemplary embodiment, the control unit 150 performs signal-processing with respect to the voice and text data read out from the storage unit 180, but this is only an example. The control unit 150 may control the signal processing unit 195 to perform signal processing with respect to voice and text data.

The receiving unit 190 receives various contents. Specifically, the receiving unit 190 receives contents from a broadcasting station which transmits broadcast program contents using a broadcast network or from a web server which transmits contents files using the Internet. In addition, the receiving unit 190 may receive contents from various recording medium reproduction apparatuses formed in the display apparatus 100 or connected to the display apparatus. The recording medium reproduction apparatus refers to an apparatus which reproduces contents stored in various types of recording media such as CD, DVD, hard disk, Blu-ray disk, memory card, USB memory, and so on. Furthermore, the receiving unit 190 may receive contents from an image processing device, a receiver device, etc.

If contents are received from a broadcasting station, the receiving unit 190 may be configured to include components such as a tuner, a demodulator, an equalizer, and so on. If contents are received from a source such as a web server, the receiving unit 190 may be realized as a network interface card. Alternatively, if contents are received from various recording medium reproduction apparatuses, the receiving unit 190 may be realized as an interface unit connected to the recording medium reproduction apparatuses. As such, the receiving unit 190 may be realized in various forms according to various exemplary embodiments.

The signal processing unit 195 performs signal-processing with respect to contents so that the contents received through the receiving unit 190 may be output through the output unit 110.

Specifically, the signal processing unit 195 performs operations such as decoding, scaling, frame rate conversion, etc., with respect to a video signal included in contents so as to convert the video signal to be in a form which can be output in the display unit 111. In addition, the signal processing unit 195 may perform signal-processing such as decoding with respect to an audio signal included in contents so as to convert the audio signal to be in a form which can be output by the audio output unit 112.

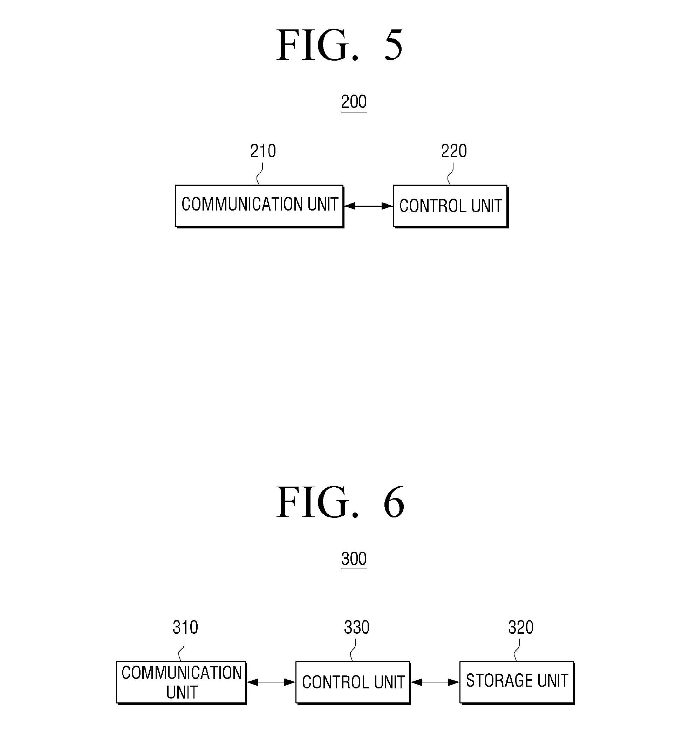

FIG. 5 is a block diagram to explain a configuration of a first server 200 according to an exemplary embodiment. As illustrated in FIG. 5, the first server 200 includes a communication unit 210 (e.g., communicator) and a control unit 220 (e.g., controller).

The communication unit 210 communicates with the display apparatus 100. Specifically, the communication unit 210 may receive a user voice from the display apparatus 100 and transmit text information corresponding to the user voice to the display apparatus 100. To do so, the communication unit 210 may include various communication modules.

The control unit 220 controls overall operations of the first server 200. In particular, if a user voice is received from the display apparatus 100, the control unit 220 controls the communication unit 210 to generate text information corresponding to the user voice and transmit the generated text information to the communication unit 210.

Specifically, the control unit 220 may generate text information corresponding to a user voice using an STT engine. Herein, the STT engine refers to a module to convert a voice signal into a text, and the control unit 220 may convert a voice signal into a text using various related art STT algorithms.

For example, the control unit 220 determines a voice section by detecting the starting point and the ending point of a voice uttered by a user within a received user voice. Specifically, the control unit 220 may detect a voice section through a dynamic programming by calculating the energy of a received voice signal and categorizing the energy level of the voice signal based on the calculated energy. In addition, the control unit 220 may generate phoneme data by detecting a phoneme which is the minimum unit of a voce based on an Acoustic Model within the detected voice section and convert the user voice into a text by applying a Hidden Markov Model (HMM) probability model to the generated phoneme data.

FIG. 6 is a block diagram to explain a configuration of a second server 300 according to an exemplary embodiment. As illustrated in FIG. 6, the second server 300 includes a communication unit 310 (e.g., communicator), a storage unit 320 (e.g., storage), and a control unit 330 (e.g., controller).

The communication unit 310 performs communication with the display apparatus 100. Specifically, the communication unit 310 may receive text information from the display apparatus 100 and transmit response information corresponding to the text information to the display apparatus 100. To do so, the communication unit 310 may include various communication modules.

The storage unit 320 stores various information to generate response information corresponding to the text information received from the display apparatus 100.

Specifically, the storage unit 320 stores conversation patterns for each service domain. The service domains may be categorized into "broadcast", "VOD", "application management", "device control", "information offering (weather, stock, news, etc.)", and so on according to themes where a user voice belongs. However, this is merely an example. The service domain may also be divided according to other diverse themes.

More specifically, the storage unit 320 may include a corpus database for each service domain. Herein, the corpus database may store example sentences and responses thereto.

That is, the storage unit 320 may store a plurality of example sentences and responses thereto for each service domain. In addition, the storage unit 320 may store information for interpreting an example sentence and a response to the example sentence by tagging for each example sentence.

For example, suppose that an example sentence, "when does ○○○ (name of a broadcast program) start?", is stored in a broadcast service domain.

In this case, the storage unit 320 may tag and store the example sentence with information for interpreting the example sentence. Specifically, the storage unit 320 may tag and store the example sentence with information informing that "○○○ (name of a broadcast program)" indicates a broadcast program, "when ... start?" indicates an inquiry about a broadcast time, and "when" indicates that the type of the example sentence is a question. In addition, the storage unit 320 may tag and store the example sentence with information that a term related to a broadcast program is located in an example sentence having the form such as "when does ~ start?". The term related to a broadcast program may include name of a broadcast program, cast, director, etc.

In addition, the storage unit 320 may tag and store the example sentence, "when does ○○○ (name of a broadcast program) start?", with a response thereto. Specifically, the storage unit 320 may tag and store the example sentence with a response, " <name of a broadcast program> starts at <a broadcast time>".

For another example, suppose that an example sentence, "please change the channel to channel ○", is stored in a broadcast service domain.

In this case, the storage unit 320 may tag and store the example sentence with information for interpreting the example sentence. Specifically, the storage unit 320 may tag and store the example sentence with information informing that "channel ○" indicates a channel number, "change" indicates a command for changing a channel, and "please" indicates that the type of the example sentence is a request. In addition, the storage unit 320 may tag and store the example sentence with information that a term related to a broadcast program is located in an example sentence having the form such as "please change the channel to ~". The term related to a broadcast program may include channel number, name of broadcast station, name of broadcast program, cast, director, etc.

In addition, the storage unit 320 may tag and store the example sentence, "please change the channel to channel ○", with a response thereto. Specifically, the storage unit 320 may tag and store the example sentence with a response, "the channel has been changed to <channel number>".

For yet another example, suppose that an example sentence, "please turn off ○○ (name of a device)", is stored in a device control domain.

In this case, the storage unit 320 may tag and store the example sentence with information for interpreting the example sentence. Specifically, the storage unit 320 may tag and store the example sentence with information informing that "○○" indicates name of a device, "turn" and "off" indicates a command for turnoff, and "please" indicates that the type of the example sentence is a request. In addition, the storage unit 320 may tag and store the example sentence with information that a term related to a device is located in an example sentence having the form such as "please turn off ~". The term related to a device may include name of the device, manufacturer, etc.

In addition, the storage unit 320 may tag and store the example sentence, "please turn off ○○ (name of a device)", with a response thereto. Specifically, the storage unit 320 may tag and store the example sentence with a response, " <name of a device> has been turned off".

In addition, the storage unit 320 may tag and store each example sentence with a control command to control the display apparatus 100 or the external device 400. In particular, the storage unit 320 may tag and store an example sentence corresponding to a user voice to control the display apparatus 100 or the external device 400, with a control command to control the display apparatus 100 or the external device 400.

For example, the storage unit 320 may tag and store an example sentence, "please change the channel to channel ○", with a control command to change the channel of the display apparatus 100 to channel o. For another example, the storage unit 320 may tag and store an example sentence, "please turn off ○○ (name of a device)", with a control command to turn off the external device 400 whose device name is ○○.

Example sentences and responses thereto which are stored in the storage unit 320 are explained in the above. However, this is merely examples. Diverse example sentences and responses for each service domain may be stored.

The control unit 330 controls overall operations of the second server 300. In particular, if text information corresponding to a user voice is received from the display apparatus 100, the control unit 330 may control to generate response information corresponding to the received text information and transmit the generated response information to the display apparatus 100 through the communication unit 310. Specifically, the control unit 330 may determine an intention of a user voice by analyzing text information and control the communication unit 310 to generate response information corresponding to the determined intention and transmit the response information to the display apparatus 100.

To do so, the control unit 330 may determine a service domain where a user voice belongs by detecting a corpus database wherein a conversation pattern matching with a received text information exists.

Specifically, the control unit 330 may compare received text information with example sentences stored for each service domain, and determine that a service domain where an example sentence matching the received text information belongs is a service domain where the user voice belongs.

For example, if a text, "when does ○○○ (name of a broadcast program) start?" or "please change the channel to channel ○", is received from the display apparatus 100, the control unit 330 may determine that the user voice collected from the display apparatus 100 belongs to a broadcast service domain, and if a text, "please turn off ○○ (name of device), is received, the control unit 330 may determine that the user voice collected from the display apparatus 100 belongs to a device control domain.

If there is no example sentence matching the received text information, the control unit 330 may statistically determine a domain where the user voice belongs.

For example, suppose that the display apparatus 100 collects a user voice, "please change the channel to channel ○", and a text corresponding to the collected user voice is transmitted to the second server 300. In this case, the control unit 330 may determine that the user voice is statistically similar to "change the channel to channel ○" using a classification model such as Hidden Markov Model (HMM), Condition Random Fields (CRF), Support Vector Machine (SVM), etc. and that the user voice, "please change the channel to channel ○", belongs to a broadcast service domain.

In addition, the control unit 330 may store text information which is statistically similar to a pre-stored example sentence. In this case, the control unit 330 may store the text information as another example sentence of the service domain where the similar example sentence belongs.

In the above case, the control unit 330 may tag and store the newly stored text information with information to interpret the newly stored text information and a response thereto, with reference to the pre-stored example sentence.

For example, suppose that a text, "please change the channel to channel ○" is stored as a newly stored example sentence.

In this case, the control unit 330 may tag and store the newly stored example sentence, "please change the channel to channel ○", with information for interpreting "please change the channel to channel ○", with reference to the pre-stored example sentence, "change the channel to channel ○". Specifically, the control unit 330 may tag and store the newly stored example sentence with information informing that "channel ○" indicates a channel number, "change" indicates a command for changing a channel, and "please" indicates that the type of the example sentence is a request. In addition, the storage unit 320 may tag and store the newly stored example sentence with information that a term related to a broadcast program is located in an example sentence having the form such as "please change the channel to ~". The term related to a broadcast program may include a channel number, name of broadcast station, name of broadcast program, cast, director, etc.

In addition, the storage unit 320 may tag and store the newly stored example sentence, "please change the channel to channel ○", with a response thereto. Specifically, the storage unit 320 may tag and store the newly stored example sentence with a response, "the channel has been changed to <channel number>".

Furthermore, If there are a plurality of example sentences which match text information received from the display apparatus 100 and the plurality of example sentences belong to different service domains, the control unit 330 may determine a service domain where the user voice belongs using statistic analysis.

Specifically, the control unit 330 may give a weighted value to each term (or morpheme) based on the frequency of a term (or morpheme) constituting text information received from the display apparatus 100 that exists in each service domain, and may determine a service domain where the user voice belongs, in consideration of the given weighted value.

For example, suppose that an example sentence, "please show ○○○ (name of a broadcast program)", is stored in a broadcast service domain and a VOD service domain, and that a text, "please show ○○○ (name of a broadcast program)", is received from the display apparatus 100.

In this case, the control unit 330 may determine that example sentences matching the text, "please show ○○○ (name of a broadcast program)", exist in the broadcast service domain and the VOD service domain. Then, based on the use frequency of terms (or morphemes), "please" and "show" which constitute the text, in each service domain, the control unit 330 may give weighted values to "please" and "show" according to each service domain.

For example, from among the entire example sentences stored in the broadcast service domain, the proportion of example sentences including "please" may be calculated as a weighted value of "please" in the broadcast service domain, and the proportion of example sentences including "show" may be calculated as a weighted value of "show" in the broadcast service domain.

Likewise, from among the entire example sentences stored in the VOD service domain, the proportion of example sentences including "please" may be calculated as a weighted value of "please" in the VOD service domain, and the proportion of example sentences including "show" may be calculated as a weighted value of "show" in the VOD service domain.

Subsequently, the control unit 330 may determine a service domain where the user voice belongs by calculating the weighted values given to each term. In the above-described example, the control unit 330 may compare a result value of multiplying the weighted values given to "please" and "show" in the broadcast service domain with a result value of multiplying the weighted values given to "please" and "show" in the VOD service domain, and determine that the user voice belongs to a service domain having a larger result value.

That is, if the result value calculated based on the weighted values given in the broadcast service domain is larger than the result value calculated based on the weighted values given in the VOD service domain, the control unit 330 may determine that the text, "please show ○○○ (name of a broadcast program)", belongs to the broadcast service domain. On the contrary, if the result value calculated based on the weighted values given in the VOD service domain is larger than the result value calculated based on the weighted values given in the broadcast service domain, the control unit 330 may determine that the text, "please show ○○○ (name of a broadcast program)", belongs to the VOD service domain.

However, this is merely an example. The control unit 330 may statistically determine a service domain where a user voice belongs using various methods.

Subsequently, the control unit 330 extracts a dialogue act, a main action, and a component slot (or an individual name) from a user voice based on a service domain where the user voice belongs. Herein, the dialogue act is a classification standard regarding the form of a sentence and indicates whether a corresponding sentence is a statement, a request, or a question.

The main action is semantic information representing an action intended from a user voice through a conversation in a specific domain. For example, in a broadcast service domain, the main action may include turning TV on/off, searching a broadcast program, searching a broadcast program time, scheduling recording of a broadcast program, and so on. For another example, in a device control domain, the main action may include turning a device on/off, playing a device, pausing a device, and so on.

The component slot is individual information regarding a specific domain, which is represented in a user voice, that is, added information to specify the meaning of an action intended in a specific domain. For example, the component slot in a broadcast service domain may include genre, program name, broadcast time, channel name, actor name, and so on. The component slot in a device control service domain may include device name, manufacturer, and so on.

In addition, the control unit 330 may determine the intention of a user voice using an extracted dialogue act, main action, and component slot, generate response information corresponding to the determined intention, and transmit the generated response information to the display apparatus 100.

Herein, the response information includes response message information to output a response message in the display apparatus 100. The response message information is a response message output from the display apparatus 100 regarding a user voice in the text form, and the display apparatus 100 may output a response message corresponding to a user voice based on response message information received from the second server 300.

To do so, the control unit 330 may extract a response to the determined intention of a voice from the storage unit 320 and generate response message information by converting the extracted response into a text.

In addition, the response information may further include a control command to execute a function corresponding to ta user voice. The control command may include a control command to control the display apparatus 100 to perform the function corresponding to the user voice, and a control command to control the external device 400 to the function corresponding to the user voice.

To do so, the control unit 330 may extract a control command corresponding to a determined intention of the user voice from the storage unit 320 and transmit the control command to the display apparatus 100.

An example of generating response information corresponding to a user voice by the control unit 330 is explained here in greater detail.

Firstly, the control unit 330 may extract a dialog act, a main action, and a component slot from a user voice using information tagged to an example sentence which matches the user voice or an example sentence which is determined statistically similar to the user voice, generate response information corresponding to the user voice, and transmit the generated response information to the display apparatus 100.

For example, suppose that a text, "when does ○○○ (name of a broadcast program) start?", is received from the display apparatus 100.

In this case, the control unit 330 may determine that the received text belongs to a broadcast service domain, extract a dialog act, a main action, and a component slot from the user voice using information tagged to an example sentence, "when does ○○○ (name of a broadcast program) start?", which matches the received text in the broadcast service domain, and generate response information corresponding to the user voice.

That is, the example sentence, "when does ○○○ (name of a broadcast program) start?", stored in the broadcast service domain is tagged with information for interpreting the example sentence, i.e. information informing that "○○○ (name of a broadcast program)" indicates a broadcast program, "when ... start?" indicates an inquiry about a broadcast time, and " when" indicates that the type of the example sentence is a question. Accordingly, based on this information, the control unit 330 may determine that the dialog act of the text, "when does ○○○ (name of a broadcast program) start?", is a question, the main action is an inquiry about a broadcast time, and the component slot is ○○○ (name of a broadcast program). Accordingly, the control unit 330 may determine that the user voice intends to "ask" a "broadcast time" of "○○○".

In addition, the control unit 330 may search the storage unit 320 for a response tagged to the example sentence, "when does ○○○ (name of a broadcast program) start?", stored in the broadcast service domain, and generate response message information using the tagged response.

That is, the control unit 330 finds a response, "<name of a broadcast program> will start on <a broadcast time>", tagged to the example sentence, "when does ○○○ (name of a broadcast program) start?", as a response to the user voice.

In this case, the control unit 330 may complete a blank in the found response and generate a complete sentence.

For example, in the response, "<name of a broadcast program> will start on <a broadcast time>", the control unit 330 may put the name of a broadcast program, "○○○", into a blank, "<name of a broadcast program>". In addition, the control unit 330 may search for the broadcast time of "○○○" using electronic program guide (EPG) information, and put the found broadcast time into a blank, "<a broadcast time>". Accordingly, the control unit 330 may generate a complete sentence, "○○○ will start on Saturday, 7 o'clock" as response message information corresponding to the user voice, and transmit the generated response message information to the display apparatus 100.

Consequently, based on the received response message information, the display apparatus 100 may output "○○○ will start on Saturday, 7 o'clock" in the form of at least one of voice and text.

For another example, suppose that a text, "please change the channel to channel ○", is received from the display apparatus 100.

In this case, the control unit 330 may determine that the received text belongs to a broadcast service domain, extract a dialog act, a main action, and a component slot from the user voice using information tagged to an example sentence, "please change the channel to channel ○", which matches the received text in the broadcast service domain, and generate response information corresponding to the user voice.

That is, the example sentence, "please change the channel to channel ○", stored in the broadcast service domain is tagged with information for interpreting the example sentence, i.e. information informing that "channel ○" indicates a channel number, "change" indicates a command to change a channel, and "please" indicates that the type of the example sentence is a request. Accordingly, based on this information, the control unit 330 may determine that the dialog act of the text, "please change the channel to channel ○", is a request, the main action is a command to change the channel, and the component slot is channel o. Accordingly, the control unit 330 may determine that the user voice intends to "request" "the change of channel" to "channel ○".

In addition, the control unit 330 may search the storage unit 320 for a response tagged to the example sentence, "please change the channel to channel ○", stored in the broadcast service domain, and generate response message information using the tagged response.

That is, the control unit 330 finds a response, "the channel has been changed to <channel number>", tagged to the example sentence, "please change the channel to channel ○", as a response to the user voice.

In this case, the control unit 330 may complete a blank in the found response and generate a complete sentence.

For example, in the response, "the channel has been changed to <channel number>", the control unit 330 may put the channel number, "channel ○", into a blank, "< channel number >". Accordingly, the control unit 330 may generate a complete sentence, "the channel has been changed to channel ○" as response message information corresponding to the user voice, and transmit the generated response message information to the display apparatus 100.

In addition, the control unit 330 may search the storage unit 320 for a control command tagged to the example sentence, "please change the channel to channel ○", stored in the broadcast service domain, and transmit the tagged control command to the display apparatus 100. That is, the control unit 330 may transmit the display apparatus 100 a control command to change the channel of the display apparatus 100 to channel ○, wherein the control command is tagged to the example sentence.

Consequently, the display apparatus 100 may change the channel to channel ○ based on the control command received from the second server 300, and output "the channel has been changed to channel ○" in the form of at least one of voice and text based on the response message information received from the second server 300.

For yet another example, suppose that a text, "please turn off ○○ (name of a device)", is received from the display apparatus 100.

In this case, the control unit 330 may determine that the received text belongs to a device control domain, extract a dialog act, a main action, and a component slot from the user voice using information tagged to an example sentence, "please turn off ○○ (name of a device)", which matches the received text in the device control domain, and generate response information corresponding to the user voice.

That is, the example sentence, "please turn off ○○ (name of a device)", stored in the device control domain is tagged with information for interpreting the example sentence, i.e. information informing that "○○ (name of a device)" indicates name of a device, "turn" and "off" indicate a command to turn power off, and "please" indicates that the type of the example sentence is a request. Accordingly, based on this information, the control unit 330 may determine that the dialog act of the text, "please turn off ○○ (name of a device)", is a request, the main action is a command to turn power off, and the component slot is ○○ (name of a device). Accordingly, the control unit 330 may determine that the user voice intends to "request" "turning off" the "○○ (name of a device)".

In addition, the control unit 330 may search the storage unit 320 for a response tagged to the example sentence, "please turn off ○○ (name of a device)", stored in the device control domain, and generate response message information using the tagged response.

That is, the control unit 330 finds a response, "<name of a device> has been turned off", tagged to the example sentence, "please turn off ○○ (name of a device)", as a response to the user voice.

In this case, the control unit 330 may complete a blank in the found response and generate a complete sentence.

For example, in the response, "<name of a device> has been turned off", the control unit 330 may put the name of the device, "○○", into a blank, "<name of a device>". Accordingly, the control unit 330 may generate a complete sentence, "○○ has been turned off" as response message information corresponding to the user voice, and transmit the generated response message information to the display apparatus 100.

In addition, the control unit 330 may search the storage unit 320 for a control command tagged to the example sentence, "please turn off ○○ (name of a device)", stored in the device control domain, and transmit the tagged control command to the display apparatus 100. That is, the control unit 330 may transmit a control command to turn off ○○ to the display apparatus 100, wherein the control command is tagged to the example sentence.

Consequently, the display apparatus 100 may turn off the external device 400, "○○", based on the control command received from the second server 300, and output "○○ has been turned off" in the form of at least one of voice and text based on the response message information received from the second server 300.

The control unit 330 may extract a dialogue act, a main action, and a component slot from a user voice using information tagged to an example sentence which is statistically similar to the user voice, and generate response information.

For example, suppose that a text, "when does ΔΔΔ (name of a broadcast program) start?", is received from the display apparatus 100.

In this case, the control unit 330 determines that the text, "when does ΔΔΔ (name of a broadcast program) start?", is statistically similar to an example sentence stored in a broadcast service domain, "when does ○○○ (name of a broadcast program) start?". Accordingly, the control unit 330 may extract a dialogue act, a main action, and a component slot from the user voice using information tagged to the example sentence, "when does ○○○ (name of a broadcast program) start?", and generate response information.

That is, the example sentence is tagged with information that a term related to a broadcast program is located in a sentence such as "when does ~ start?", so as to interpret the example sentence. Accordingly, the control unit 330 searches what meaning "ΔΔΔ (name of a broadcast program)" has from among the terms related to a broadcast program, such as name of a broadcast program, cast, director, etc.

To do so, the storage unit 330 may include a named entity dictionary, a TIMEX dictionary, or the like, which stores information about component slots for each service domain.

That is, the control unit 330 may search what meaning "ΔΔΔ (name of a broadcast program)" has with reference to the named entity dictionary or the TIMEX dictionary, and determine that "ΔΔΔ (name of a broadcast program)" indicates name of a broadcast program.

However, this is merely an example. The control unit 330 may search what meaning "ΔΔΔ (name of a broadcast program)" has, using EPG information or the pre-stored example sentence and CRF.

Accordingly, the control unit 330 may determine that the dialog act of the text, "when does ΔΔΔ (name of a broadcast program) start?", is a question, the main action is an inquiry about a broadcast time, and the component slot is ΔΔΔ (name of a broadcast program). In addition, the control unit 330 may determine that the user voice intends to "ask" a "broadcast time" of "ΔΔΔ".

Furthermore, the control unit 330 may generate response message information about "when does ΔΔΔ (name of a broadcast program) start?" using a response tagged to the example sentence stored in the broadcast service domain, and transmit the generated response message information to the display apparatus 100.

That is, the control unit 330 finds a response, "<name of a broadcast program> will start on <a broadcast time>", tagged to the example sentence, "when does ○○○ (name of a broadcast program) start?", as a response to the user voice. In addition, the control unit 330 may generate a complete sentence, "ΔΔΔ will start on Wednesday, 11 o'clock" as response message information corresponding to the user voice, and transmit the generated response message information to the display apparatus 100.

On the other hand, if the display apparatus 100 pre-stores data of a portion of a response message sentence, the control unit 330 may transmit only a portion of text to complete the sentence to the display apparatus 100.

For example, if the display apparatus 100 pre-stores a response, "<name of a broadcast program> will start on <a broadcast time>", the control unit 330 may transmit the name of the broadcast program and the broadcast time in the text form to the display apparatus 100 so as to complete the pre-stored response. In this case, the control unit 330 may transmit a control signal to output the pre-stored response to the display apparatus 100.

Accordingly, the display apparatus 100 may put the text received from the second server 300 into the pre-stored response and output the complete sentence, "○○○ will start on Saturday, 7 o'clock" as a response message.

In the examples described above, the control unit 330 extracts a dialog act, a main action, and a component slot from a user voice using information tagged to an example sentence, but this is merely an example. That is, the control unit 330 may extract a dialog act and a main action using Maximum Entropy Classifier (MaxEnt), and extract a component slot using CRF.

However, the present invention is not limited thereto. The control unit 330 may extract a dialog act, a main action, and a component slot from a user voice using diverse known methods.

If it is not possible to determine the intention of a user voice which is currently received, the control unit 330 may determine the intention of the user voice with reference to a previously-received user voice. That is, the control unit 330 may determine whether a currently-received user voice is a first user voice in a conversation pattern by comparing the currently-received user voice with conversation patterns stored in a corpus database, and if it is determined that the currently-received user voice is not a first user voice, may determine the intention of the user voice with reference to the previously-received user voice.

For example, suppose that a user voice, "when does it start?", is input after a user voice, "when does ○○○ (name of a broadcast program) start?" is input. In this case, if it is determined that the user voice, "when does it start?", is not a first user voice in a broadcast service domain, the control unit 330 may determine the intention of the user voice, "when does it start?", based on a previously-received user voice, "when does ○○○ (name of a broadcast program) start?".

That is, the control unit 330 may determine that the intention of the user voice, "when does it start?", is to "inquiry" "the stating time of a program" titled "○○○" using "○○○ (name of a broadcast program)" included in the previously-received user voice in order to determine the intention of the user voice, "when does it start?", of which component element cannot be extracted.

In FIGS. 1 to 4, the display apparatus 100 outputs a response message corresponding to a user voice or performs a specific function based on response information received from the second server 300, but this is merely an example. The display apparatus 100 may output a response message corresponding to a user voice or perform a specific function using text information received from the first server 200.

This is described in more detail with reference to FIG. 4.

The storage unit 180 may store diverse information to generate response information corresponding to text information received from the first server 200. That is, like the storage unit 320 of the second server 300, the storage unit 180 may store a plurality of example sentences and a response thereto for each service domain. The storage unit 180 may tag and store an example sentence with information to interpret the example sentence, a corresponding response, and a control command.

The control unit 150 may generate response information corresponding to a user voice using the stored example sentences and tagged information, and output a response message corresponding to the user voice based on the generated response information, or control the display apparatus 100 or the external device 400 to perform a corresponding function in accordance with the user voice. In this case, the control unit 150 may use the same method as in the second server 300.

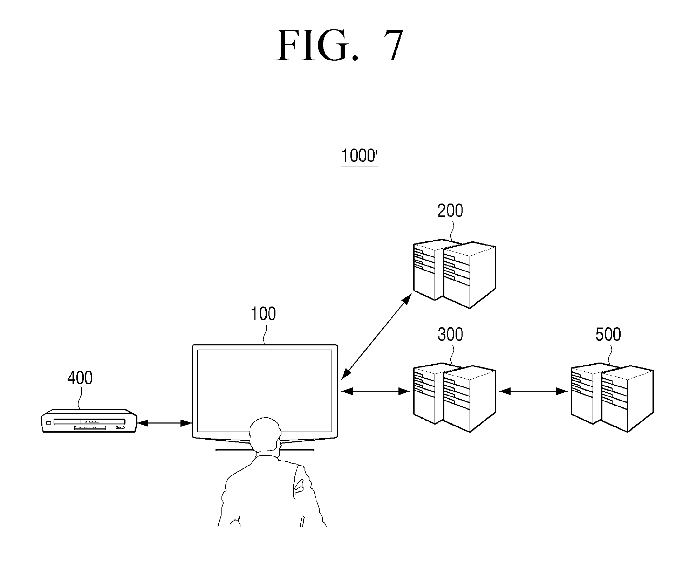

FIG. 7 is a view to explain an interactive system according to another exemplary embodiment. As illustrated in FIG. 7, an interactive system 1000' includes the display apparatus 100, the first server 200, the second server 300, the external device 400, and an external server 500. The interactive system in FIG. 7 is different from the interactive system in FIG. 1 in that the interactive system in FIG. 7 further includes the external server 500. Descriptions which are overlapped with FIGS. 1 to 6 will be omitted herein for convenience of description. However, operations of the second server 300 are described with reference to the block diagram of FIG. 6.

The second server 300 determines the intention of a user voice based on text information received from the display apparatus 100, generates response information based on the determined intention, and transmits the generated response information to the display apparatus 100. In this case, the second server 300 may generate response information using search information received from the external server 500.

Herein, the case where it is not possible to generate response information is a case where a blank in a found response cannot be completed.

In this case, the second server 300 may collect search information corresponding to text information by transmitting text information received from the display apparatus 100 to the external server 500, and generate response information based on the search information.

In addition, the second server 300 may extract a certain keyword from text information received from the display apparatus 100 and transmit the keyword to the external server 500. For example, in the text of "what is the weather like in Seoul?", keywords may be "Seoul" and "weather", and the second server 300 may store certain keywords for each service domain.

The external server 500 generates search information based on text information received from the second sever 300 or a keyword extracted from text information and transmits the generated search information to the second server 300. Specifically, the external server 500 may be realized as a web server storing various information to perform a web search with respect to text information or a keyword extracted from text information and transmit the search result to the second server 300.

Accordingly, the second server 300 may generate response information by completing the blank in the found response using the search result received from the external server 500, and transmit the generated response information to the display apparatus 100.

For example, if a text of "what is the weather like in ○○ (district name)?" is received from the display apparatus 100, the control unit 330 may determine that the user voice intends to "ask" the "weather" of "○○ (district name)" and find "The weather of <district name> is <weather information>" as a response.

In this case, the control unit 330 may put "○○ (district name)" into a blank <district name> in the found response. However, in order to complete the other blank <weather information>, the control unit 330 may transmit the received text information or a keyword extracted from the text information to the external server 500. Herein, the keyword may be "○○ (district name)" and "weather". Accordingly, the external server 500 may search weather information about ○○ (district name).

In addition, if the control unit 330 receives search result from the external server 500, the control unit 330 may generate response message information corresponding to the user voice using the received search result, and transmit the generated response message information to the display apparatus 100. In this example, if search result that the weather of ○○ (district name) is 25°C is received from the external server 500, the control unit 330 may generate a complete sentence of "the weather of ○○ (district name) is 25°C" as response message information corresponding to the user voice, and transmit the generated response message information to the display apparatus 100.

Consequently, the display apparatus 100 may output "the weather of ○○ (district name) is 25°C" in the form of at least one of voice and text based on the response message information received from the second server 300.

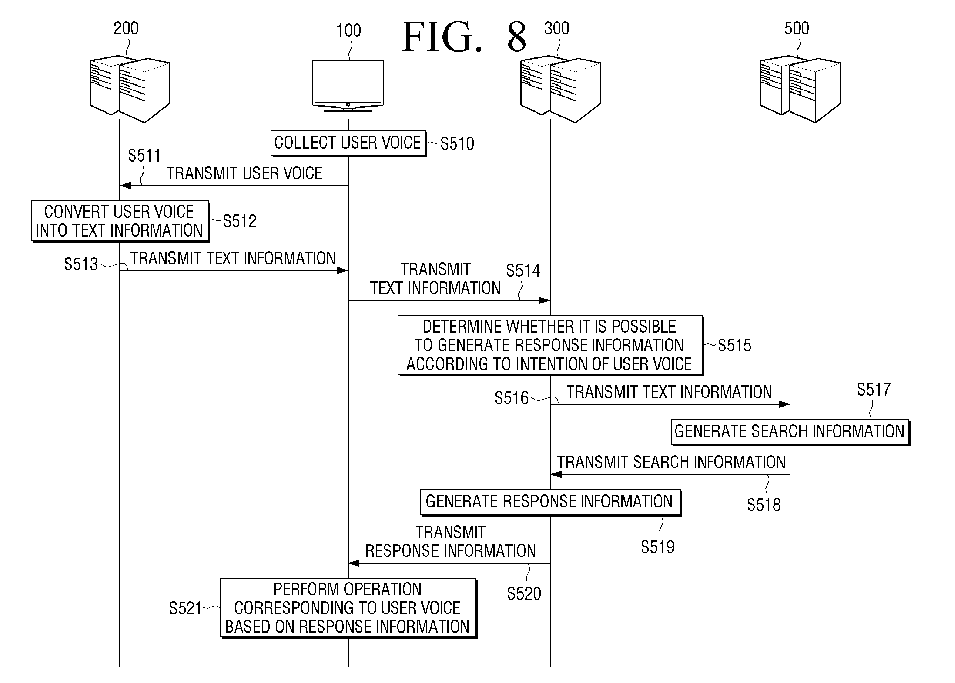

FIG. 8 is a timing view to explain each operation of the interactive system illustrated in FIG. 7. The specific configuration of the second server 300 is the same as or similar to that of FIG. 6, and the operation of the second server 300 will be explained with reference to the block diagram illustrated in FIG. 6. In addition, operations S510 to S514 in FIG. 8 are the same as or similar to operations S10 to S50 in FIG. 2, and overlapping explanations will be omitted herein for convenience of description.

The second server 300 determines the intention of a user voice based on text information received from the display apparatus 100 and determines whether it is possible to generate response information according to the determined intention of the user voice (operation S515).

Specifically, the control unit 330 determines a service domain where a user voice belongs based on text information received from the display apparatus 100 and determines the intention of the user voice based on the service domain. Subsequently, the control unit 330 extracts a response corresponding to the determined intention of the user voice from a corpus database in the storage unit 310, which has been explained above with reference to FIGS. 1 to 6.

Further, the control unit 330 generates response message information using the extracted response.

If the extracted response is not a complete sentence and it is not possible to complete the sentence using pre-stored information, the control unit 330 determines that it is not possible to generate response information according to the intention of the user voice.

For example, suppose that it is determined that the intention of a collected user voice, "when does ○○○ (name of a broadcast program) start?", is to "inquiry" the starting time of a program" titled "○○○", and "the broadcast time of <name of a program> is <broadcast time>" is extracted as a response. In this case, the control unit 330 generates response message information, "the broadcast time of ○○○ (name of a program) is Saturday, 7 o'clock" using EPG information.

For another example, suppose that it is determined that the intention of a collected user voice, "what is the weather like in ○○ (district name)?", is to "inquiry" "the weather" of "○○ (district name)", and "the weather of <district name> is <weather information>" is extracted as a response. In this case, if information regarding the current weather of ○○ (district name) is not pre-stored in the second server 300, it is not possible to complete the extracted sentence using pre-stored information. As such, if it is not possible to generate response message information in the form of a complete sentence using pre-stored information, the control unit 330 determines that it is not possible to generate response information according to the intention of a user voice.

In this case, the second server 330 transmits text information received from the display apparatus 100 to the external server 500 (operation S516). To do so, the communication unit 310 may perform communication with the external server 500.

Specifically, if it is not possible to generate response information according to the intention of the user voice, that is, if it is not possible to complete an extracted sentence using pre-stored information, the control unit 330 controls the communication unit 310 to transmit text information received from the display apparatus 100 to the external server 500. That is, in the present exemplary embodiment, the control unit 330 controls to transmit text information, "what is the weather like in ○○ (district name)?", to the external server 500.

In addition or alternatively, the control unit 330 may extract a keyword from text information received from the display apparatus 100 and transmit the extracted keyword to the external server 500 through the communication unit 310.

To do so, the storage unit 320 may store information regarding various keywords extracted from text information. Specifically, the storage unit 320 may store a pre-defined keyword for each service domain. For example, the storage unit 320 may match a weather-related keyword such as district name, temperature, snow, probability, etc., with an information offering service domain, and match a broadcast-related keyword such as program name, main actor, singer, song title, etc., with a broadcast service domain, and store those keywords.

For example, as the user voice, "what is the weather like in ○○ (district name)?", belongs to an information offeringservice domain, the control unit 330 may control to detect a keyword such as "○○ (district name)" and "weather" in the text information and transmit the keyword to the external server 500.

The external server 500 generates search information (operation S517) and transmits the generated search information to the second server 300 (operation S518). Specifically, the external server 500 may be realized as a web server and may perform a web search with respect to text information or a keyword received from the second server 300 and generate the result of the web search as search information.

As described above, if a text, "what is the weather like in ○○ (district name)?", or a keyword such as "○○ (district name)" and "weather" is received from the second server 300, the external server 500 may perform a web search using corresponding information and transmit information regarding the searched current weather of ○○ (district name) to the second server 300.

If search information is received from the external server 500, the second server 300 may generate response information (operation S519) and transmit the generated response information to the display apparatus 100 (operation S520).

Specifically, the control unit 330 may generate response information corresponding to a user voice using search information. That is, the control unit 330 may generate response message information by reconfiguring an extracted response to be a complete sentence using search information and transmit the generated response message information to the display apparatus 100.

That is, in the present exemplary embodiment, if search information that the weather of ○○ (district name) is 25□ is received from the external server 500, the control unit 330 may control to generate response message information that "the weather of ○○ (district name) is 25□" based on the search information and transmit the generated response message information to the display apparatus 100.

The display apparatus 100 performs an operation corresponding to a user voice based on response information received from the second server 300 (operation S521). In the above-described exemplary embodiment, the display apparatus 100 may output the response message, "the weather of ○○ (district name) is 25□", in the form of at least one of a voice and a text based on the response message information received from the second server 300, which has been explained above with reference to FIG. 1 to FIG. 6.

In FIG. 1 and FIG. 8, a single server including the first server 200 and the second server 300 may be referred to as an interactive server. In FIG. 1 and FIG. 8, the first server 200 and the second server 300 are illustrated as separate components, but this is only an example. That is, the first server 200 and the second server 300 may be realized as a single server and in this case, the single server may be referred to as an interactive server.

In this case, the display apparatus 100 does not receive text information corresponding to a user voice, and a single server may convert a user voice into a text, generate response information corresponding to the user voice based on the converted text, and transmit the generated response information to the display apparatus 100.

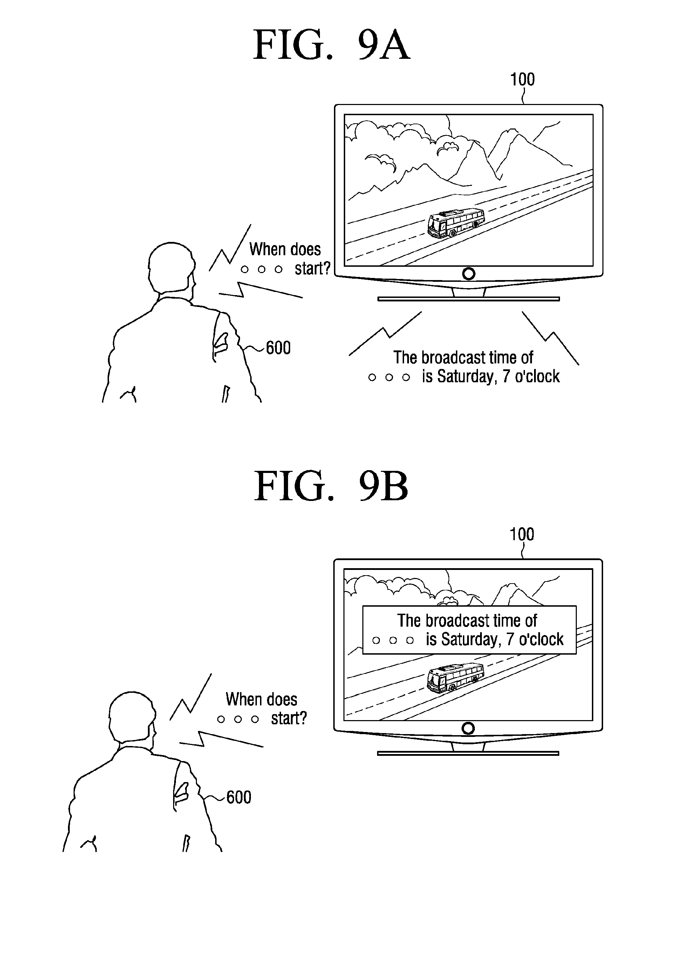

FIGS. 9 to 11 are views to explain an operation of an interactive system according to an exemplary embodiment.

For example, suppose that a user 600 who is watching a specific broadcast program utters "when does ○○○ (name of a broadcast program) start?", as illustrated in FIGS. 9A and 9B. In this case, the display apparatus 100 may output a response message corresponding to "when does ○○○ (name of a broadcast program) start?" based on response information received from the second server 300. That is, the display apparatus 100 may output "the broadcast time of ○○○ (name of a broadcast program) is Saturday, 7 o'clock" as a voice or a text on the screen based on the response information received from the second server 200.

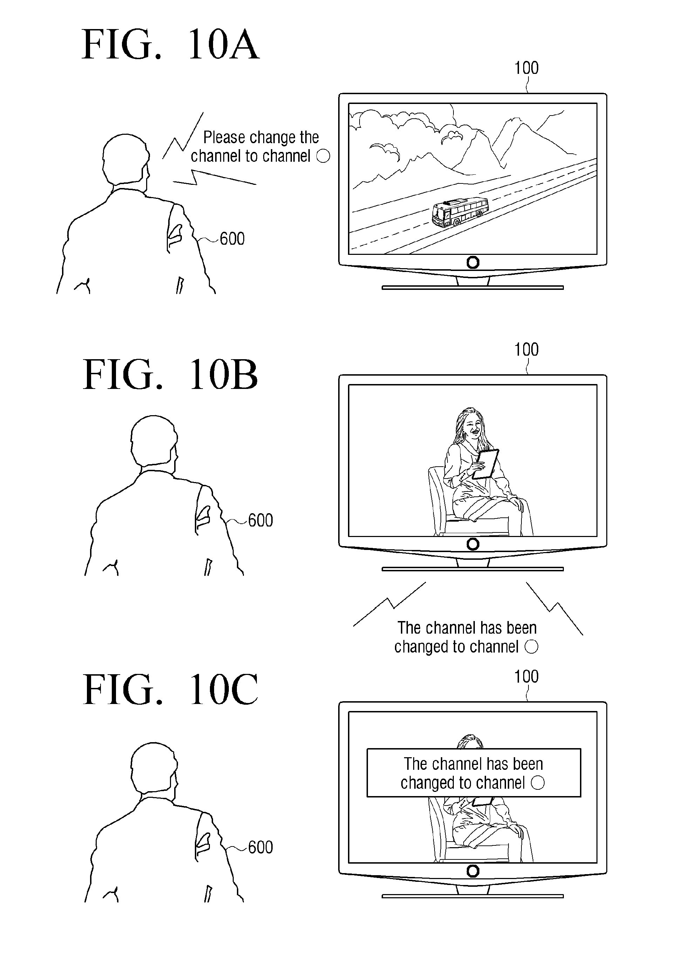

Meanwhile, suppose that a user 600 who is watching a specific broadcast program utters "please change the channel to channel o?", as illustrated in FIG. 10A.

In this case, as illustrated in FIGS. 10B and 10C, the display apparatus 100 may output a response message corresponding to "please change the channel to channel ○" based on response information received from the second server 300, and change the channel.

Specifically, the display apparatus 100 may output a response message, "the channel has been changed to channel ○" as a voice or a text on the screen. In addition, the display apparatus 100 may change the channel to channel ○ based on a control command received from the second server 300.

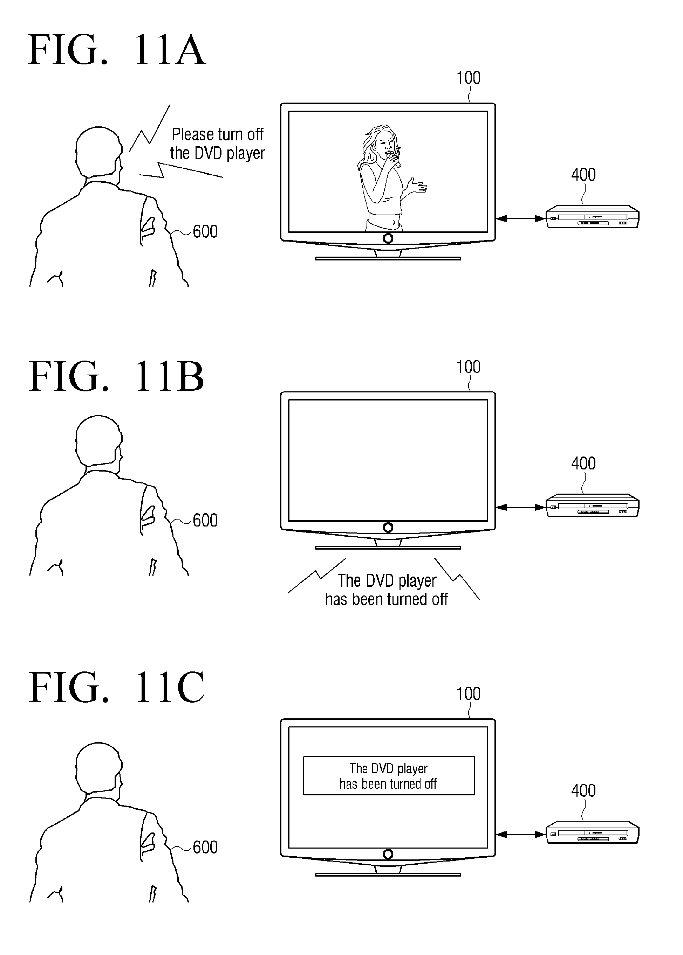

For example, suppose that a user 600 who is watching a DVD utters "please turn off the DVD player", as illustrated in FIG. 11A.

In this case, as illustrated in FIGS. 11B and 11C, the display apparatus 100 may output a response message corresponding to "please turn off the DVD player" based on response information received from the second server 300, and turn the DVD player off.

Specifically, the display apparatus 100 may output a response message, "the DVD player has been turned off" as a voice or a text on the screen. In addition, the display apparatus 100 may turn the DVD player off based on a control command received from the second server 300.

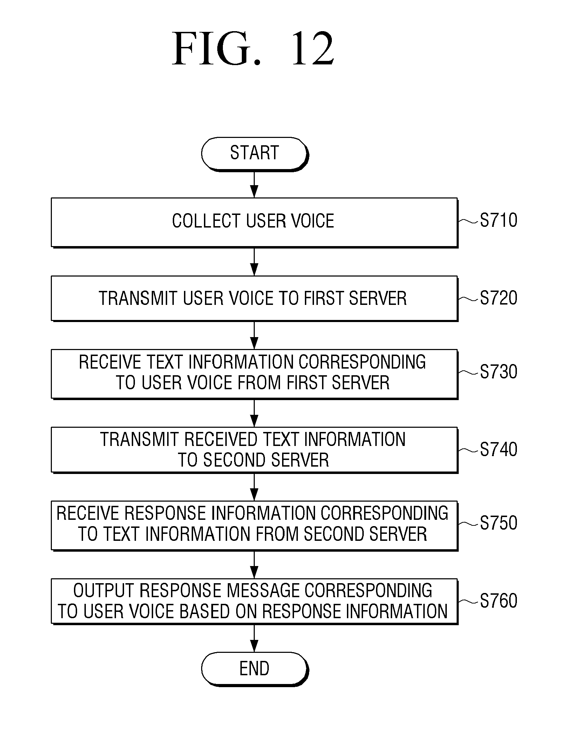

FIG. 12 is a flowchart to explain a method for controlling a display apparatus 100 according to an exemplary embodiment.

Referring to FIG. 11, a user voice is collected (operation S710). Specifically, a user voice may be collected through a microphone which is integrally formed with a display apparatus 100 or provided separately.

Subsequently, the user voice is transmitted to the first server 200 (operation S720) and text information corresponding to the user voice is received from the first server 200 (operation S730). Specifically, a user voice which is converted to be in a text form through an STT algorithm may be received from the first server 200.

Subsequently, the received text information is transmitted to the second server 300 (operation S740), and response information corresponding to the text information is received from the second server 300 (operation S750). Herein, the response information includes response message information to output a response message in the display apparatus 100. That is, the response message information, which is a response message corresponding to the user voice in a text form, may be received from the second server 300.

Afterwards, the response message corresponding to the user voice is output based on the response information (operation S760). Specifically, the response message corresponding to the user voice may be output as at least one of a voice and a text based on the response text information.

The response information may further include a control command to control the functions of the display apparatus 100. Accordingly, the display apparatus 100 may not only output the response message corresponding to the user voice, but also perform a specific function corresponding to the user voice.

The second server 300 determines the intention of the user voice based on the received text information, and if it is not possible to generate response information according to the intention of the user voice, may generate response information using search information received from an external server 500. That is, if it is not possible to generate response information according to the determined intention of the user voice, the second server 300 transmits the text information to the external server 500. Accordingly, the external server 500 generates search information based on the text information and transmits the generated search information to the second server 300, and the second server 300 may generate response information using the search information and transmit the generated response information to the display apparatus 100.

A non-temporal recordable medium in which a program to perform various controlling methods sequentially according to an exemplary embodiment may be provided.

The non-temporal recordable medium refers to a medium which may store data semi-permanently rather than storing data for a short time such as a register, a cache, and a memory and may be readable by an apparatus. Specifically, the above-mentioned various applications or programs may be stored in a non-temporal recordable medium such as CD, DVD, hard disk, Blu-ray disk, USB, memory card, and ROM and provided therein.

In the above block diagram illustrating the display apparatus and the server, a bus is illustrated, and communication between each component element in the display apparatus and the server may be performed through the bus. In addition, each device may further include a processor such as a CPU performing the above-mentioned various steps and a microprocessor, and so on. Moreover, it is understood that in exemplary embodiments, one or more units of the above-described apparatuses can include circuitry, a processor, a microprocessor, etc., and may execute a computer program stored in a computer-readable medium.

Although a few exemplary embodiments have been shown and described, it would be appreciated by those skilled in the art that changes may be made in these exemplary embodiments without departing from the principles of the inventive concept, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:
at least one of a display (100) configured to output text and a speaker configured to output audio;
a communicator (130) configured to transmit the collected user voice by a microphone (120) to a server;
and **characterized by**
a controller (150) which controls the at least one of the display and the speaker to output a response message responding to the collected user voice based on information received from the server;
wherein the received information is generated based on the collected user voice and a user voice transmitted to the server before the collected user voice.

2. The apparatus as claimed in claim 1, wherein the received information comprises a control command to control an operation of the image processing apparatus responding to the collected user voice.

3. The apparatus as claimed in claim 1 or 2, wherein the server is configured to determine an intention of the collected user voice based on text information converted from the collected user voice, and, in response to the server determininng that it is not possible to generate the information according to the determined intention, generate the information according to the determined intention using search information received from an external server, wherein determining the intention of the collected user voice is achieved by the control unit extracting a dialog act, a main action, and a component slot from a user voice using information tagged to an example sentence which matches the user voice or an example sentence which is determined statistically similar to the user voice, generate response information corresponding to the user voice, and transmit the generated response information to the display apparatus; wherein the component slot is individual information regarding a specific domain, which is represented in a user voice.

4. The apparatus as claimed in anyone of claim 1 to 3, wherein the received information comprises a control command to control an operation of the display apparatus responding to the collected user voice.

5. The apparatus as claimed in anyone of claim 1 to 4, further comprising a storage configured to store a predetermined response message, wherein the controller (150), in response to the information being received from the server, is configured to control the at least one of the display and the speaker to output the predetermined response message responding to the collected user voice based on the received information.

6. The apparatus as claimed in claim 5, wherein the received information comprises a control signal which controls the controller (150) to output, through the at least one of the display and the speaker, the predetermined response message responding to the collected user voice.

7. The apparatus as claimed in claim 5 or 6, wherein the controller (150) is configured to, in response to the information being received from the server and the received information comprising a partial text responding to the collected user voice, control the at least one of the display and the speaker to output a combination of the partial text and the predetermined response message responding to the collected user voice.

8. The apparatus as claimed in anyone of claim 5 to 7, wherein the predetermined response message comprises at least one of audio and text.

9. A method for controlling an image processing apparatus, the method comprising:
collecting a user voice;
transmitting the collected user voice to a server;
**characterized by**
receiving information generated based on a service domain corresponding to the collected user voice, from among a plurality of predetermined service domains, from the server and,
outputting a response message responding to the collected user voice based on the information received from the server,
wherein the received information is generated based on the collected user voice and a user voice which belong to the service domain, transmitted to the server before the collected user voice.

10. The method as claimed in claim 9, wherein the information comprises a control command to control an operation of the image processing apparatus responding to the collected user voice.

11. The method as claimed in claim 9 or 10, wherein the server determines an intention of the collected user voice based on text information converted from the collected user voice, and in response to the server determin that it is not possible to generate the information according to the determined intention, generates the response information according to the determined intention using search information received from an external server, wherein determining the intention of the collected user voice is achieved by the control unit extracting a dialog act, a main action, and a component slot from a user voice using information tagged to an example sentence which matches the user voice or an example sentence which is determined statistically similar to the user voice, generate response information corresponding to the user voice, and transmit the generated response information to the display apparatus; wherein the component slot is individual information regarding a specific domain, which is represented in a user voice

12. An interactive system (1000, 1000') comprising:
an image processing apparatus configured to transmit a collected user voice;
**characterized by**
a server which in response to receiving the transmitted user voice from the image processing apparatus, is configured to generate text information corresponding to the received user voice to the image processing apparatus; and
is configured to transmit response information corresponding to the generated text information to the image processing apparatus,
wherein the image processing apparatus, in response to receiving the transmitted response information from the server, is configured to output a response message responding to the collected user voice based on the received response information
wherein the server generates the response information usingthe collected user voice and a user voice which belong to the service domain, transmitted to the server before the collected user voice..

13. The system (1000, 1000') as claimed in claim 12, wherein:
the image processing apparatus is configured to generate and output the response message responding to the collected user voice as at least one of audio and text based on the received information.
